# EUROPÄISCHE PATENTANMELDUNG

(11) **EP 0 730 909 A1**
(43) Veröffentlichungstag der Anmeldung: **11.09.1996**
(21) Anmeldenummer: 96102866.9
(22) Anmeldetag: 27.02.1996
(51) Int. Cl.: B03B 9/06, B03B 11/00

(54) **Entleereinrichtung für Betonpumpen**

(30) Priorität: 09.03.1995 DE 19508343
(71) Anmelder: Brenner, Horst, 71717 Beilstein (DE)
(72) Erfinder: Brenner, Horst, 71717 Beilstein (DE)
(74) Vertreter: Gleiss & Grosse

(57) **Zusammenfassung**

Die Erfindung betrifft eine Entleereinrichtung für Betonpumpen mit einer Auswaschvorrichtung (3) und einer Auffangvorrichtung (5) für den aus der Betonpumpe ausgefüllten Restbeton und die Spülflüssigkeit, wobei die Auffangvorrichtung (5) einen Aufgabetrichter (9) zur Aufnahme des Restbetons und eine Fördervorrichtung (6) aufweist. Die Fördervorrichtung (6) umfaßt eine Förderschnecke, die den ausgespülten Restbeton zusammen mit der Spülflüssigkeit aus dem Aufgabetrichter (9) in die Auswaschvorrichtung (3) fördert.

## Beschreibung

Die vorliegende Erfindung betrifft eine Entleereinrichtung für Betonpumpen nach dem Oberbegriff des Anspruchs 1.

Solche Entleereinrichtungen sind aus dem Stand der Technik bekannt. Sie werden dazu benutzt, den beim Ausspülen von Betonpumpen anfallenden Restbeton zusammen mit dem Spülwasser einer Wiederaufbereitung zuzuführen. Dazu werden das Spülwasser und der Restbeton zunächst in einem Auffangbehälter aufgefangen. Sobald die Reinigung der Betonpumpe beendet oder der Auffangbehälter voll ist, bewegt eine Hubeinrichtung diesen Auffangbehälter nach oben und entleert ihn dann in eine nachgeordnete Auswaschanlage. Diese Hubeinrichtung ist notwendig, da der Ausfluß der Betonpumpe in der Regel einen geringen Abstand zum Boden aufweist und eine direkte Entleerung in die Auswaschanlage deshalb nicht möglich ist. Die Auswaschanlage könnte zwar im Boden versenkt werden. Aus Kostengrunden bevorzugt man jedoch die Lösung mit der Hubeinrichtung.

Eine solche Hubeinrichtung hat jedoch den Nachteil, daß ein großer mechanischer Aufwand im Hinblick auf den Antrieb erforderlich ist. Bei einem Volumen des Auffangbehälters von beispielweise einem Kubikmeter müssen nicht selten Gewichte von bis zu 3 Tonnen von dem Hubantrieb bewegt werden. Entsprechend großer Aufwand ist bei der mechanischen Auslegung der Konstruktion notwendig.

Darüber hinaus muß der Spülvorgang immer dann abgebrochen werden, wenn der Auffangbehälter voll ist. Dies führt zu Verzögerungen bei der Entleerung und dadurch auch zu Kostennachteilen.

Im übrigen ist aus Sicherheitsgründen eine Abschrankung erforderlich, die den unmittelbaren Schwenkbereich der Hubeinrichtung vor Zutritten schützt.

Aus der Offenlegungsschrift DE 341 24 373 A1 ist bekannt, statt der Hubeinrichtung eine Pumpe einzusetzen.

Hierbei ergibt sich jedoch der Nachteil, daß eine Pumpe sehr störanfällig ist, insbesondere schnell verstopft.

Die Aufgabe der vorliegenden Erfindung besteht deshalb darin, eine Entleereinrichtung für Betonpumpen zu schaffen, der die obengenannten Nachteile nicht mehr anhaften.

Diese Aufgabe wird durch die Merkmale des Anspruchs 1 gelöst. Dadurch, daß statt der Hubeinrichtung eine Fördervorrichtung eingesetzt wird, die das ausgespülte Spülwasser zusammen mit dem Restbeton in die Auswaschanlage fördert, lassen sich einfache Antriebsaggregate verwenden und der konstruktive Aufwand relativ gering halten.

Weitere vorteilhafte Ausgestaltungen der Erfindung sind den abhängigen Ansprüchen zu entnehmen.

Im folgenden wird nun anhand einer Zeichnung ein Ausführungsbeispiel beschrieben. Dabei zeigen
- Figur 1: schematisch eine Seitenansicht einer Anlage mit einer Entleereinrichtung, und
- Figur 2: schematisch die Draufsicht der in Figur 1 gezeigten Anlage.

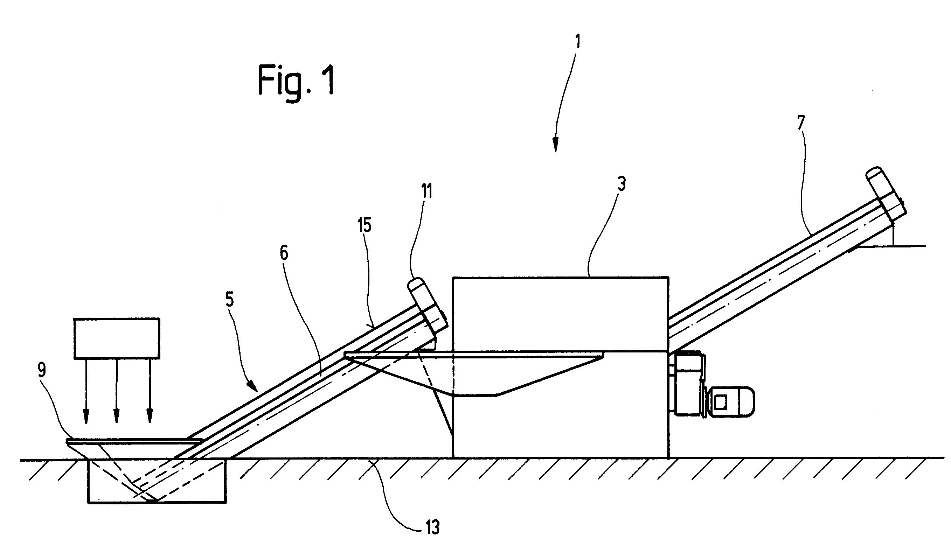

Die in Figur 1 gezeigte Anlage setzt sich im wesentlichen zusammen aus einer beliebigen Auswaschvorrichtung 3, einer daran angeschlossenen beliebigen Austragschnecke 7 sowie einer ebenfalls an der Auswaschvorrichtung 3 angebrachten Entleereinrichtung.

Diese Entleereinrichtung 5 umfaßt eine Förderschnecke 6, die über einen Motor 11 angetrieben wird, der an dem der Auswaschvorrichtung 3 zugewandten Ende der Förderschnecke angeordnet ist, und einen am gegenüberliegenden Ende vorgesehenen Aufgabetrichter 9, der nach oben hin geöffnet ist.

Die Entleereinrichtung 5 verläuft in einem bestimmten Winkel zum Boden 13, so daß in den Aufgabetrichter 9 eingegebenes Material über die Förderschnecke 6 nach oben in die Auswaschvorrichtung 3 transportiert werden kann.

Aus Figur 1 ist deutlich erkennbar, daß das den Aufgabetrichter tragende Ende der Förderschnecke 6 teilweise im Boden 13 versenkt ist. Hiermit erreicht man, daß die obere Öffnung des Aufgabetrichters 9 ein bestimmtes Niveau, das durch die untere Öffnung der Betonpumpe vorgegeben ist, nicht überschreitet.

Der nicht dargestellte Schneckenkörper der Förderschnecke 6 ist von einem Gehäuse 15 umschlossen, wobei im Inneren des Gehäuses 15 der Förderschnecke eine Förderrinne zugeordnet ist, die als flexible elastische Bahn ausgebildet ist. Eine genauere Offenbarung dieser Förderschnecke findet sich in dem Gebrauchsmuster G 91 00 176.5, dessen Offenbarung hiermit in die vorliegende Anmeldung mit einbezogen wird.

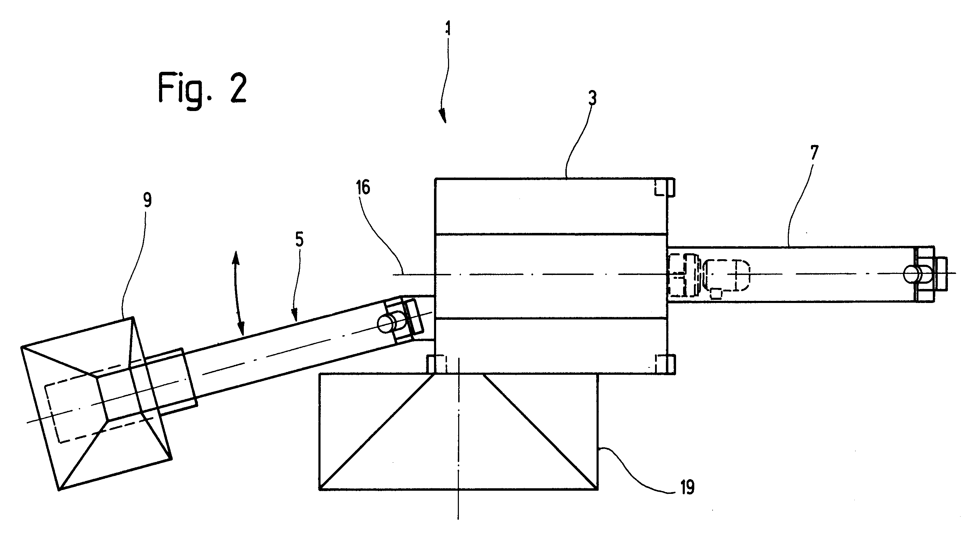

Aus Figur 2 ist ersichtlich, daß die Entleereinrichtung 5 so angebracht ist, daß sie in horizontaler Ebene einen Winkel von vorzugsweise 15° mit der Längsachse 16 der Auswaschvorrichtung 3 einschließt. Selbstverständlich kann die Position der Entleereinrichtung 5 auch verändert werden, wenn sich die vorhergehende Position im Betrieb als nicht ideal herausgestellt hat.

An der Auswaschvorrichtung 3 ist darüber hinaus ein weiterer Aufgabetrichter 19 angebracht. Dieser Aufgabetrichter 19 ist für Beton-Fahrmischer vorgesehen, deren Auslauf niveaumäßig höher angeordnet ist als bei Betonpumpen. Deshalb kann auf eine Förderschnecke ohne Probleme verzichtet werden. Restbeton und Spülflüssigkeit fließen direkt in die Auswaschvorrichtung.

Im Betrieb wird die Betonpumpe an den Aufgabetrichter 9 herangefahren und mit Spülwasser beaufschlagt. Der aus der Betonpumpe ausgespülte Restbeton fließt zusammen mit dem Spülwasser direkt in den Aufgabetrichter 9. Von dort gelangt dieser Restbeton über die Förderschnecke 6 in die Auswaschvorrichtung 3.

In der beliebigen Auswaschanlage 3 findet dann ein Auswaschen des Betons statt, wobei gröbere Bestandteile über 0,2 mm ausgebracht werden. Das restliche Gemisch fließt dann in ein Rührwerksbecken und von dort in die eine Betonmischanlage.

## Patentansprüche

1. Entleereinrichtung für Betonpumpen mit
einer Auffangvorrichtung (5) für den aus der Betonpumpe ausgespülten Restbeton und die Spülflüssigkeit,
**dadurch gekennzeichnet,** daß
die Auffangvorrichtung (5) einen Aufgabetrichter (9) zur Aufnahme des Restbetons und eine Fördervorrichtung (6) aufweist, wobei die Fördervorrichtung (6) eine Förderschnecke umfaßt, die den ausgespülten Restbeton zusammen mit der Spülflüssigkeit aus dem Aufgabetrichter (9) in die Auswaschvorrichtung (3) fördert.

2. Entleereinrichtung nach Anspruch 1, **dadurch gekennzeichnet**, daß der Förderschnecke eine Förderrinne zugeordnet ist, die als elastische Wanne ausgebildet ist.

3. Entleereinrichtung nach einem der vorhergehenden Ansprüche, **dadurch gekennzeichnet**, daß die Auffangvorrichtung (5) verlagerbar an der Auswaschvorrichtung (3) angeordnet ist.

4. Entleereinrichtung nach Anspruch 3, **dadurch gekennzeichnet**, daß die Auffangvorrichtung (5) in einer horizontalen und/oder vertikalen Ebene verstellbar angeordnet ist.

5. Entleereinrichtung nach einem der vorhergehenden Ansprüche, **dadurch gekennzeichnet**, daß der Auswaschvorrichtung (3) mehrere Auffangvorrichtungen (5) zugeordnet sind.

6. Entleereinrichtung nach einem der vorhergehenden Ansprüche, **dadurch gekennzeichnet**, daß das Lager der Förderschnecke außerhalb des Schmutzbereichs angeordnet ist.
